# EUROPEAN PATENT APPLICATION

(11) **EP 1 398 911 A1**
(43) Date of publication of application: **17.03.2004**
(21) Application number: 02741221.2
(22) Date of filing: 20.06.2002
(51) Int. Cl.: H04L 12/28, G06F 13/00

(54) **INFORMATION PROCESSING APPARATUS AND METHOD**

(30) Priority: 20.06.2001 JP 2001186645
(71) Applicant: Sony Corporation, Tokyo 141-0001 (JP)
(72) Inventor: NODA, Takuro, Sony Corproation, Shinagawa-ku, Tokyo 141-0001 (JP); SATO, Makoto, Sony Corporation, Shinagawa-ku, Tokyo 141-0001 (JP); AOKI, Yukihiko, Sony Corporation, Shinagawa-ku, Tokyo 141-0001 (JP); SHIMA, Hisato, Sony Corporation, Shinagawa-ku, Tokyo 141-0001 (JP)
(74) Representative: Pilch, Adam John Michael
(86) International application number: PCT/JP2002/006177
(87) International publication number: WO 2003/001744

(57) **Abstract**

The present invention relates to an information processing apparatus and method that enables apparatuses connected to an IEEE 802 network to communicate with one another. A UPnP control point 1 and a UPnP device 2 are connected with an IEEE 802 network 11. When controlling the UPnP device 2, the UPnP control point 1 describes the content of control based on an AV/C command utilized for IEEE 1394. The command based on SOAP is transmitted to UPnP device 2 via the IEEE 802 network 11. The UPnP device 2 extracts the AV/C command from the command based on SOAP and executes a corresponding process. The present invention can be applied in personal computers.

## Description

### Technical Field

The present invention relates to an information processing apparatus and method, and more specifically, relates to an information processing apparatus and method for realizing an inexpensive system in which devices connected with a network based on IEEE 802 can easy and reliably be controlled and communicate with one another.

### Background Art

Nowadays, a network using an IEEE (Institute of Electrical and Electronics Engineers) 802 network has become popular. This IEEE 802 is a network mainly for connecting personal computers to each other and, based on a Universal Plug and Play (UPnP) protocol, each personal computer can control the other personal computers.

The UpnP code has included transport protocols like a code for description of machine information in "Device Description", SOAP (Simple Object Access Protocol), GENA (General Event Architecture) and the like.

However, these codes do not have codification of machine model or command system, thus giving rise to a problem in which machines cannot communicate with each other in order to able one machine to control the another.

In order to permit such communications, it has been necessary to develop a new protocol and, in order to do so a considerably great amount of time and costs was required.

### Disclosure of the Invention

The present invention has been conceived in view of such a situation, and it aims at making it possible to realize easy and reliable communications under low cost.

An information processing apparatus of the present invention is characterized by having a capture means for capturing from a network, a command based on SOAP containing an AV/C command according to IEEE 1394; an extracting means for extracting the AV/C command from the command based on SOAP captured by the capture means; and an execution means for executing a corresponding process based on the command based on SOAP, extracted by the extracting means.

It is possible to further include a generation means for generating the AV/C command; an incorporation means for incorporating the AV/C command generated by the generation means to a command based on the SOAP; and a transmitting means for transmitting to network the command based on the SOAP in which the AV/C command is incorporated by the incorporation means.

The execution means may transmit a final response corresponding to the AV/C command.

The execution means transmits an INTERIM when not able to transmit the final response within a predetermined period of time after receiving the AV/C command.

The execution means may have a device model, the device model having a root device and the root device having an AV/C service for executing a predetermined action.

The execution means may have a device model, the device model haviong a root device and an embedded device corresponding respectively to a unit and a sub-unit according to IEEE 1394, the root device and the embedded device having respectively an AV/C service for executing a predetermined action.

The execution means may have a device model, the device model having a root device and an embedded device corresponding respectively to a unit and a sub-unit according to IEEE 1394, the root device and the embedded device having respectively, for each of an AV/C command opcode, an AV/C service for executing a predetermined action.

An information processing method according to the present invention is characterized by having a capture step for capturing from a network, a command based on SOAP containing an AV/C command according to IEEE 1394; an extracting step for extracting the AV/C command from the command based on SOAP captured by the capture step; and an execution step for executing a corresponding process based on the command based on SOAP, extracted by the extracting step.

A program of a recording medium according to the present invention is characterized by having a capture step for capturing from a network, a command based on SOAP containing an AV/C command according to IEEE 1394; an extracting step for extracting the AV/C command from the command based on SOAP captured by the capture step; and an execution step for executing a corresponding process based on the command based on SOAP, extracted by the extracting step.

A program according to the present invention causes execution of a capture step for capturing from a network, a command based on SOAP containing an AV/C command according to IEEE 1394; an extracting step for extracting the AV/C command from the command based on SOAP captured by the capture step; and an execution step for executing a corresponding process based on the command based on SOAP, extracted by the extracting step.

In the information processing apparatus, the method, the recording medium and the program of the present invention, a AV/C command incorporated in a command based on SOAP is extracted and executed.

### Brief Description of Drawings

Fig. 1 is a diagram showing the configuration of a network system to which the present invention is applied;
Fig. 2 is a block diagram showing the configuration of a UPnP device 2 of Fig. 1;
Fig. 3 is a diagram showing the configuration of a device model which the UPnP device 2 of Fig. 1 has;
Fig. 4 is a diagram showing the configuration of an AV/C command frame;
Fig. 5 is a diagram illustrating a ctype;
Fig. 6 is a diagram illustrating a subunit_type;
Fig. 7 is a flow chart illustrating processes of the network system of Fig. 1;
Fig. 8 is a diagram showing the configuration of a command output at Step S3 of Fig. 7;
Fig. 9 is a diagram showing the configuration of an AV/C command incorporated in the command of Fig. 8;
Fig. 10 is a diagram showing the configuration of a response of the AV/C command incorporated in the command of Fig.11;
Fig. 11 is a diagram showing an example of a response output at the process of Step 12 of Fig. 7;
Fig. 12 is a diagram showing a configuration of UPnP Device Description which the root device of Fig. 3 has;
Fig. 13 is a diagram showing a configuration of UPnP Device Description which the AV/C service of Fig. 3 has;
Fig. 14 is a diagram showing a configuration of another UPnP Device Description which the root device of Fig. 3 has;
Fig. 15 is a diagram showing another configuration of UPnP Device Description which the AV/C service of Fig. 3 has;
Fig. 16 is a diagram showing another configuration of UPnP Device Description which the AV/C service of Fig. 3 has;
Fig. 17 is a diagram showing another configuration of device model;
Fig. 18 is a diagram showing a configuration of UPnP Device Description which the root device of Fig. 17 has;
Fig. 19 is a diagram showing a configuration of UPnP Device Description which the AV/C service of Fig. 17 has;
Fig. 20 is a diagram showing still another configuration of device model;
Fig. 21 is a diagram showing a configuration of AV/C Proxy Device Description which the root device of Fig. 19 has;
Fig. 22 is a diagram showing a configuration of UPnP Device Description which the root device of Fig. 20 has;
Fig. 23 is a diagram showing a configuration of UPnP Device Description which the root device of Fig. 20 has;
Fig. 24 is a diagram showing comparisons between device models.

### Best Mode for Carrying Out the Invention

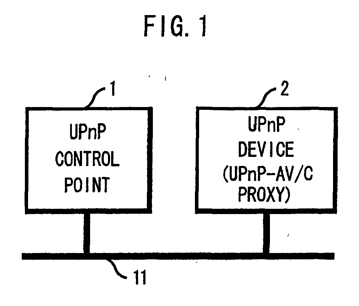

Fig. 1 shows the configuration of a network system to which the present invention is applied. In the configuration, a UPnP control point 1 is connected with an IEEE 802 network 11.

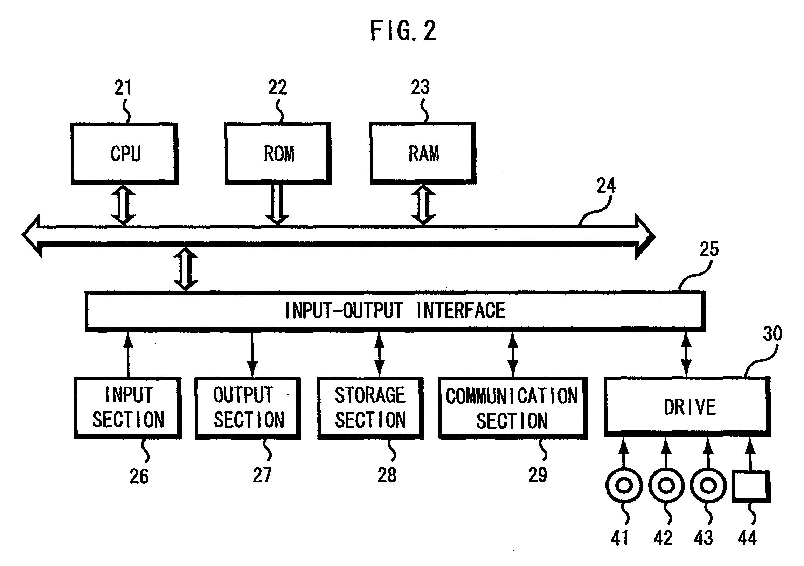

Fig. 2 shows an example of the configuration of the UPnP device 2. In Fig. 2, a central processing unit (CPU) 21 executes various processes in conformity with a program stored in a read only memory (ROM) 22, or a program load on a random access memory (RAM) 23 from a storage section 28. The data and the like which are necessary for the CPU 21 to execute various processes are also properly stored in the RAM 23.

The CPU 21, the ROM 22 and the RAM 23 are mutually connected through a bus 24. An input-output interface 25 is also connected with the bus 24.

To the input-output interface 25 there are connected an input section 26 composed of a keyboard, a mouse and the like; an output section 27 composed of a display, such as a CRT and an LCD, a speaker and the like; a storage section 28 composed of a hard disk and the like; and a communication section 29 composed of a modem, a terminal adapter and the like. The communication section 29 performs communication processes through the IEEE 802 network 11.

A drive 30 is also connected with the input-output interface 25 as the need arises, and a magnetic disk 41, an optical disk 42, a magneto-optical disk 43, a semiconductor memory 44 and the like are suitably connected thereto. Then, computer programs read out from them are installed into the storage section 28 as a need arises.

UPnP devices (the UPnP control point 1 and the UPnP device 2 in case of the example of Fig. 1) mainly have six functions of Addressing, Discovery, Description, Control, Eventing and Presentation.

Addressing is a function by which each UPnP device acquires an address on the IEEE 802 network 11, and Dynamic Host Configuration Protocol (DHCP) or Auto IP is used therefor.

Discovery is performed after Addressing, and the UPnP control point 1 can find a target device that the UPnP control point 1 wants to control by means of Discovery. The protocol used here is Simple Service Discovery Protocol (SSDP). When each device is connected with the IEEE 802 network 11, the device multicasts a message notifying a device and a service which the device includes in itself on the IEEE 802 network 11 (namely, the devices transmits a packet without specifically designating the destination of the packet). By receiving the multicast message, the UPnP control point 1 can know which device has been connected with the IEEE 802 network 11.

On the contrary, it is also possible for the UPnP control point 1 to examine the devices connected with the IEEE 802 network 11 at the present time. At this time, the UPnP control point 1 multicasts a retrieval command on the IEEE 802 network 11 by the use of the device or the service which are wanted to be discovered as key words. If each device connected with the IEEE 802 network 11 fits the conditions prescribed in the multicast retrieval command, the device performs the unicast of a response to the retrieval command (namely, the device transmits a packet by designating a destination). Thereby, the UPnP control point 1 can detect a device connected with the IEEE 802 network 11.

Moreover, when each device are disconnected the IEEE 802 network 11, the device broadcasts the fact in advance.

With the Discovery, the uniform resource locator (URL) of Device Description is described in an SSDP packet output by the device being an object of control and discovered by the UPnP control point 1. The UPnP control point 1 is enabled to obtain further detailed device information of the device from Device Description by accessing the URL. The device information includes icon information, a model name, a manufacturer name, product name and the like.

In addition, the device information describes the service information which the device has. Service Description in which the detailed information of the service is described can also be traced on the basis of the URL described in the service information.

The UPnP control point 1 is enabled to know how to access to a target on the basis of the device information (Device Description) and the service information (Service Description).

Moreover, in the Device Description, a Presentation URL, which will be described later, is described.

The Device Description and Service Description are expressed by Extensible Markup Language (XML).

Control is classified to two large groups of Action and Query. Action is performed in conformity with a method prescribed in action information of Service Description, and the UPnP control point 1 can handle a target by invoking Action.

On the other hand, Query is used for capturing the value of state Variable of Service Description. The value of state Variable indicates the state of a device.

In Control, a transport protocol called as Simple Object Access Protocol (SOAP) is used. As the representation language of SOAP, XML is used.

Eventing is used for making a target notify the UPnP control point 1 of an alteration of the value of stateVariable when the alteration is performed. The UPnP control point 1 can know the variables held by the target on the basis of stateVariable by analyzing Service Description. By having output Subscription to the target, the UPnP control point 1 can receive a notice from the target when a variable has changed in respect of the variables to which sendEvents are yes among the variables. In Eventing, a transport protocol called as General Event Notice Architecture (GENA) is used. As the representation language of the protocol, XML is used.

Presentation is used for supplying control means using a user interface (UI) to a user. By accessing Presentation URL described in Device Description, a user can obtain Presentation Page described with Hyper Text Markup Language (HTML). By means of the function, a target can prepare an application.

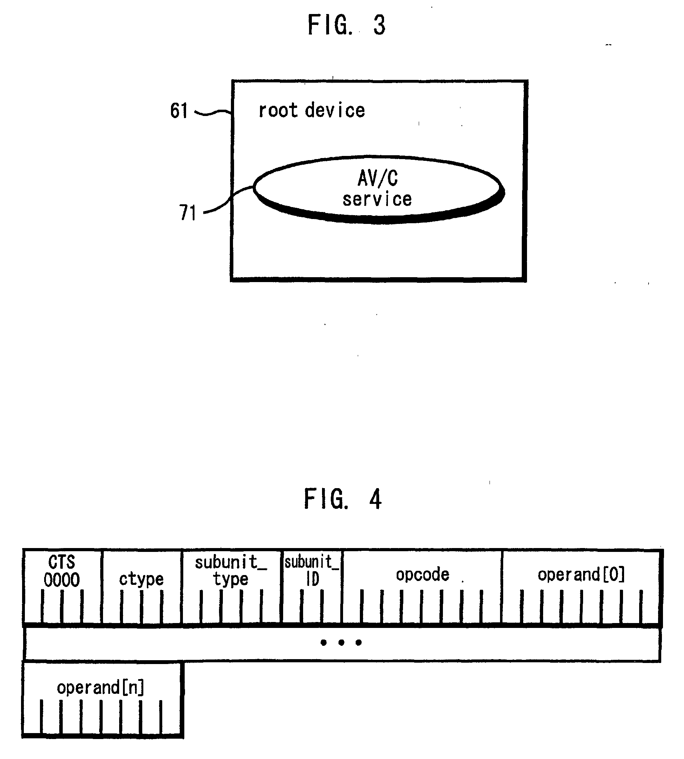

The UPnP device 2 has provided inside a device model shown in Fig. 3. The device model of the example is composed of one root device 61 and such root device 61 includes an AV/C proxy service 71.

The AV/C service 71 extracts and processes an AV/C command from a command based on an SOAP that has been sent from the UpnP control point 1. In addition, the AV/C service 71 generates, incorporates and sends control content based on the IEEE 1394 AV/C command to a command based on AV/C.

Fig. 4 shows a format of an AV/C command frame.

In the CTS field, the type of a command set is described. The value "0" (hexadecimal) ( "0000" if binary) indicates that the command set is an AV/C command set.

In a ctype field, it is described whether the packet is a command or a response and, if it is a command, the function classification of the command is described therein and, if the packet is a response, the classification of a result of process of the command is described.

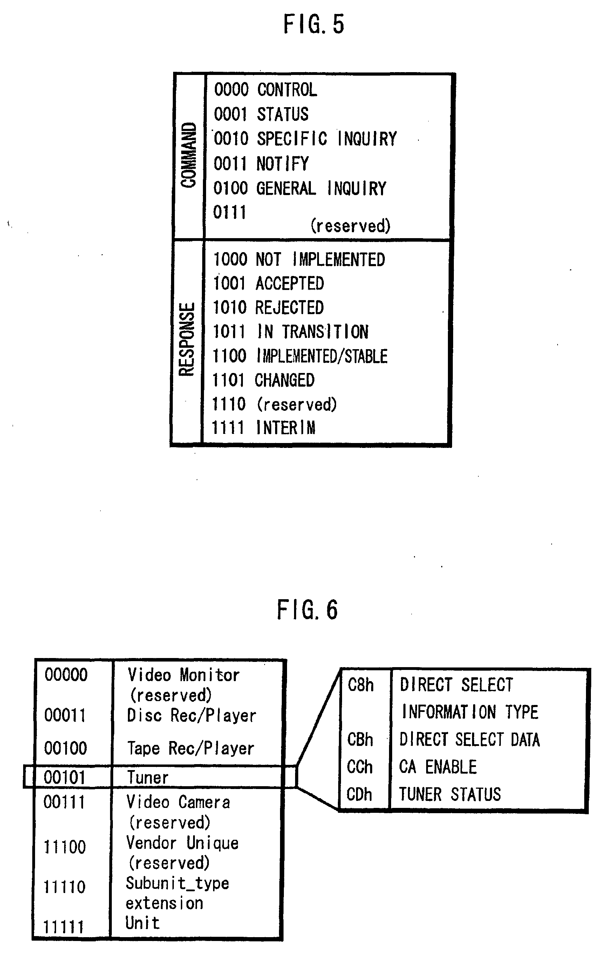

Fig. 5 shows examples of such commands and responses. As shown in the figure, four kinds of commands are prepared as large command groups.

CONTROL (ctype = 0000) is a command for controlling a function from the outside.

STATUS (ctype = 0001) is a command for inquiring a state from the outside.

Moreover, GENERAL INQUIRY (ctype = 0100) and SPECIFIC INQUIRY (ctype = 0010) exist as commands for inquiring the existence of the support of a control command from the outside. The former is a command for inquiring the existence of an opcode support, and the latter is a command for inquiring the existence of the supports of opcodes and operands.

NOTIFY (ctype = 0011) is a command for requesting to notify the outside of a change of status. However, this NOTIFY is not used in the present invention.

Responses are returned according to the type of commands.

As responses to the CONTROL commands, the following responses are prepared.

NOT IMPLEMENTED (ctype = 1000) notifies that no commands are implemented. ACCEPTED (ctype = 1001) notifies that a command has been executed. REJECTED (ctype = 1010) notifies that a command could not be executed.

INTERIM (ctype = 1111) notifies that a command is in process.

As responses to a STATUS command, IN TRANSITION and STABLE exist in addition to NOT IMPLEMENTED and REJECTED.

IN TRANSITION (ctype = 1011) notifies that a status is transiting. STABLE notifies that a status is not transiting and is stable.

As responses to the GENERAL INQUIRY command and the SPECIFIC INQUIRY command, IMPLEMENTED and NOT IMPLEMENTED exist. IMPLEMENTED (ctype = 1100) notifies that a command is implemented.

As a response to the NOTIFY command, NOT IMPLEMENTED, REJECTED, INTERIM and CHANGED exist.

INTERIM first notifies that NOTIFY has been accepted. CHANGED (ctype = 1101) notifies that the state of a target has changed after that. However, in the present invention, the INTERIM is outputted even when it is difficult to output a final response when a predetermined time (for example, 30 seconds) is elapsed after receiving the AV/C command.

"subunit_type" in the AV/C command frame of Fig. 4 indicates a destination of a command. A concrete example of the subnit_type is shown in Fig. 6.

In other words, the value "00000" of subunit_type indicates that the destination (sub-unit) of the AV/C command is Video Monitor. Moreover, the value "00101" indicates that the destination is Tuner.

The value "11111" of subunit_type indicates that the command is addressed to a unit. As a result, for example, the turning on and the turning off of the power source of an apparatus are controlled.

Next to subunit_type of Fig. 4, subunit_ID is arranged. "subunit_ID" is used as a discrimination number for performing the discrimination in the case where a plurality of sub-units of the same kind exists in a unit. As a consequence, after all, the destination of a command is determined on the basis of both of subunit_type and subunit_ID.

An opcode indicates an command operation, and an operand indicates an additional condition of an command.

Fig. 6 shows an example of the opcode in the case where scbunit_type is Tuner. In case of the opcode of Tuner, the value C8h thereof indicates DIRECT SELECT INFORMATION TYPE, and the value CBh thereof indicates DIRECT SELECT DATA.

By such a way, a table of opcodes is prepared for each subunit. Moreover, an operand is defined to each opcode.

For example, in case of performing cannel selection of a tuner, the opcode in the case is selected to be DIRECT SELECT INFORMATION TYPE, and the parameters of the channel such as the frequency thereof and the channel number thereof are designated by the operand.

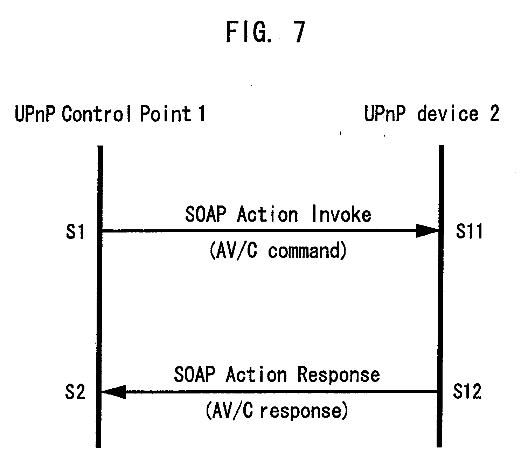

Next, upon referring to while the process in the flow chart of Fig. 7, a process of controlling the UPnP device 2 by the UPnP control point 1 is described by taking a case where the power supply of the UPnP device 2 is turned on as an example.

At Step S1, the UPnP control point 1 invokes a request packet of an action based on SOAP which describes a command for controlling a prescribed action of the UPnP device 2 (the turning on of the power supply of the AV/C device 3 in the present case) (Invoke).

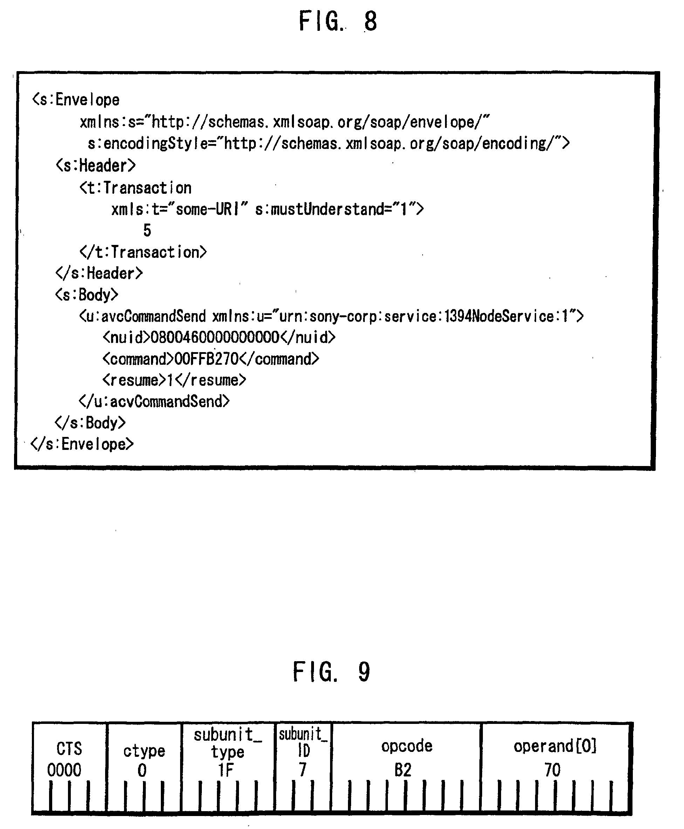

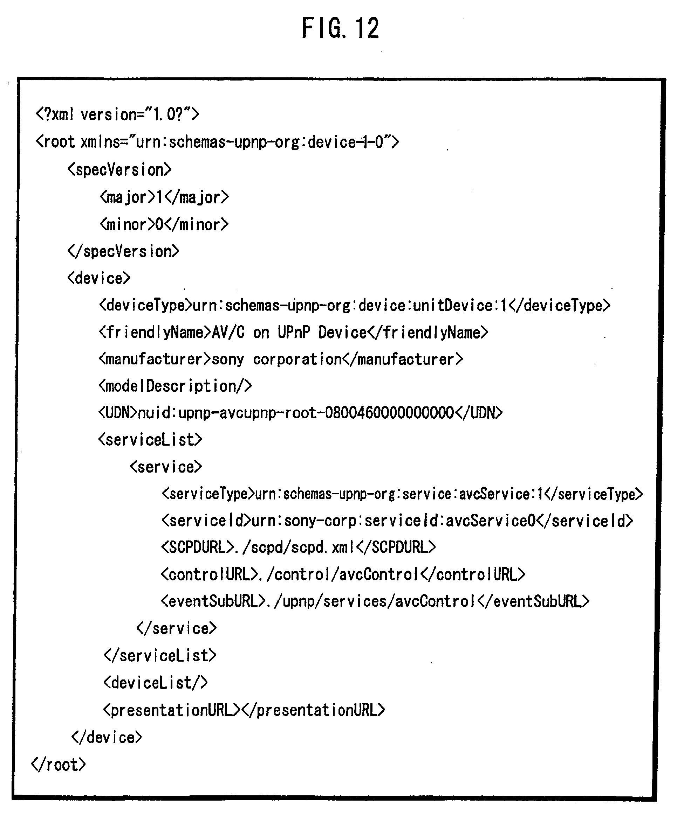

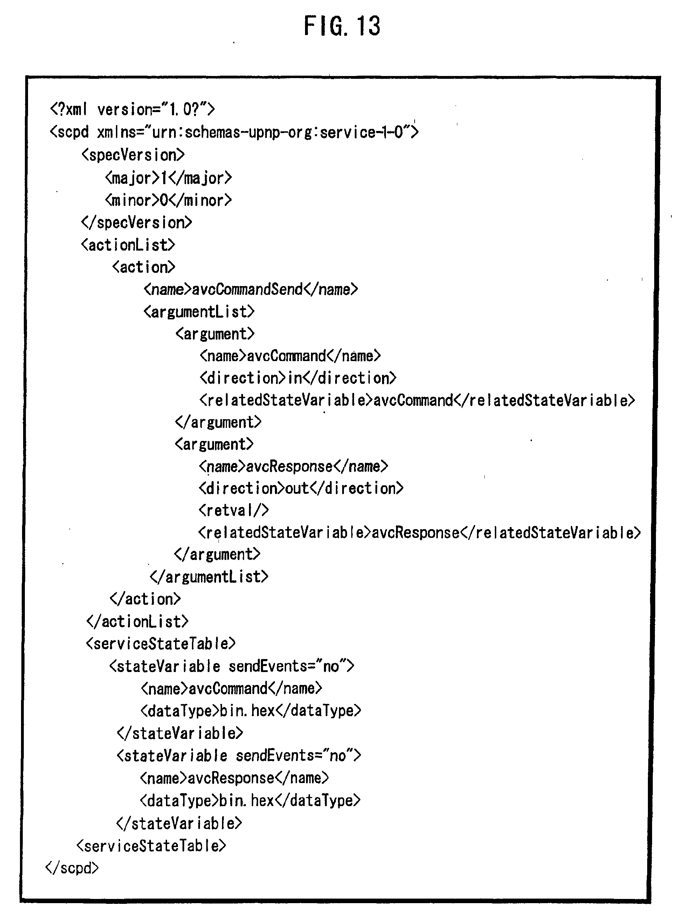

Fig. 8 shows an example of a message command based on SOAP transferred to the UPnP device 2 from the UPnP control point 1. The UPnP control point 1 makes the message by referring to UPnP Device Description and UPnP Service Description, which the UPnP device 2 has and are shown in Fig. 12 and Fig. 13 that will be described later.

The numeral "5" included in Transaction indicates a transaction label as a label for recognizing which command a returned response corresponds to because responses are returned corresponding to commands.

The command "00FFB270" indicates the contents of a control described by an AV/C command by which the UPnP control point 1 requests the UPnP device 2.

"00FF" (hexadecimal number) included on the MSB side of the command corresponds to CTS "0000", ctype "0000", subunit_type "11111" and subunit_ID "111" in an AV/C POWER control command (binary number) shown in Fig. 9. That is, if the hexadecimal number "00FF" is expressed by a binary number, the binary number is "0000000011111111".

The next "B2" corresponds to an opcode, and "70" corresponds to an operand.

Because all of the values indicating the contents of the commands are expressed by means of a text, it is possible to describe any kind of AV/C commands.

Returning to Fig. 7, when the UPnP device 2 receives at Step S11 the Action Invoke shown in Fig 8, the UPnP device 2 turns the power of the apparatus on in accordance with a content of the command.

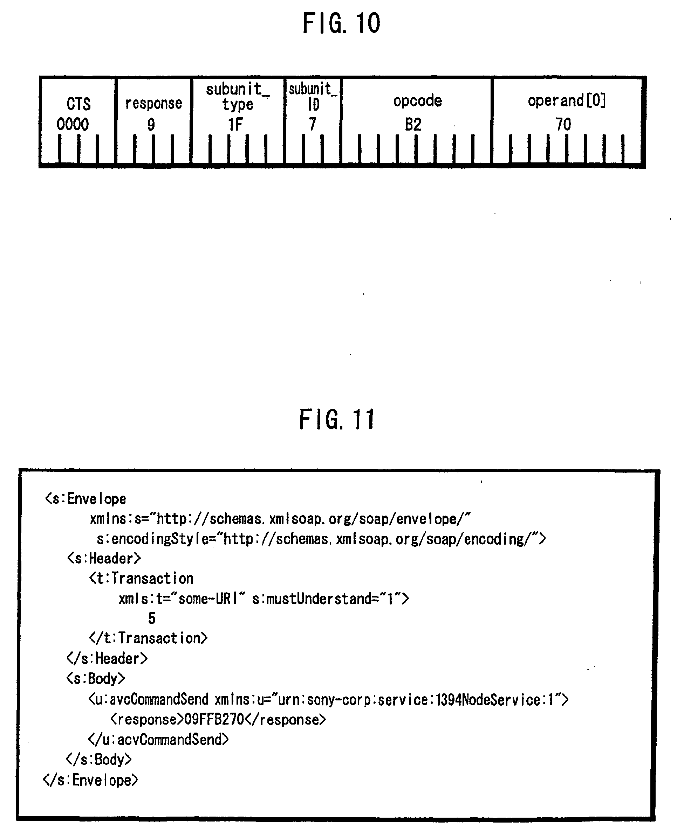

Thereafter, in Step 12, the AV/C service 71 of the UPnP device 2 generates an AV/C response (AV/C POWER response) corresponding to the process as shown in Fig. 10, stores in Response as an Action based on an SOAP protocol as shown in Fig. 11, and transmits to the UPnP control point 1.

The numeral "5" shown in Transaction shown in Fig. 11 is set to be "5" (the same value) corresponding to the value "5" of Transaction in Fig. 8 for indicating that Action Response is Action (Response) forming a counterpart to Action (Command) of Fig. 8.

The response "09FFB270" corresponds to the value "00001001111111111010001001110000" of the binary number described in the AV/C POWER response of Fig. 10.

The UPnP control point 1 receives the response at Step S2. As a result, the UPnP control point 1 can acknowledge that the UPnP device 2 has turned the power supply of the apparatus on.

According to the provisions of AV/C, it is prescribed that an AV/C device shall return INTERIM as a response when the AV/C device cannot execute the process corresponding to a received request immediately. When the AV/C device has completed the process corresponding to the request after that, the AV/C device shall return a final response to the transmitter of the request at the point of time. However, the period of time from the reception of the request to the returning of the final response is not prescribed.

In the present invention, after outputting an AV/C command against the UPnP control point 1 in the process of Step S11, the AV/C service 71 receives the command from the UPnP control point 1 in Step S25 and estimates a period of time until transmitting a Final Response, in Step S12. If the Final Response can be within a predetermined period of time which has been set previously (e.g. 30 seconds), the AV/C service 71 does not transmit the INTERIM immediately to the UPnP control point 1, but stands by until a process corresponding to the command is completed and, if the process is completed within 30 seconds, then outputs the Final Response to the UPnP control point 1.

On the other hand, if the process corresponding to the command is not completed within 30 seconds, the AV/C service 71 outputs the INTERIM to the UPnP control point 1. In addition, when process is finished, the Final Response is transmitted. As a result, the UPnP control point 1 can acknowledge at least whether the requested process can be completed within 30 seconds.

In order to execute the above-mentioned process, the root device 61 of the device model, which is shown in Fig. 3 and the UPnP Device 2 has (similar to the case of UPnP control point 1), includes a UPnP Service Description shown in Fig. 12 and the AV/C Service 71 includes a UPnP Service Description shown in Fig. 13.

These Descriptions describe parameters and other conditions necessary for executing the functions which the devices have. When another device requests the devices to execute the functions, the other device refers to Description to add the conditions described in Description, and then the other device transmits a command to the devices.

deviceType [urn:sony-corp:device:1394 ProxyDevice:1] in Fig. 12 indicates that the type of the root device 61 is a unit Device. FriendlyName [AV/C on UPnP Device] indicates a friendly name of the root device 61.

UDN[nuid:upnp-avcupnp-root-0800460000000 000] indicates a specific number of the root device 61.

In this UPnP Device Description, a service is provided in which ServiceType that is a type of service is [urn:schemas-upnp-org: service:avcService:1] and service ID is [urn:sony-corp:ServiceId:1394ProxyService1].

SCPDURL [./scpd/proxyScpd.xml] indicates the URL of UPnP Service Description, which the AV/C service 71 has, (specifically, the URL of UPnP Service Description shown in Fig. 13).

The UPnP Service Description of Fig. 13 describes an Action to be carried out by the AV/C service 71. An [avcCommandSend] indicates an action for transmitting an AV/C command. This action includes as arguments, parameters such as [avcCommand] and [avcResponse]. A data format of these parameters is described as [bin.hex] in the [serviceStateTable].

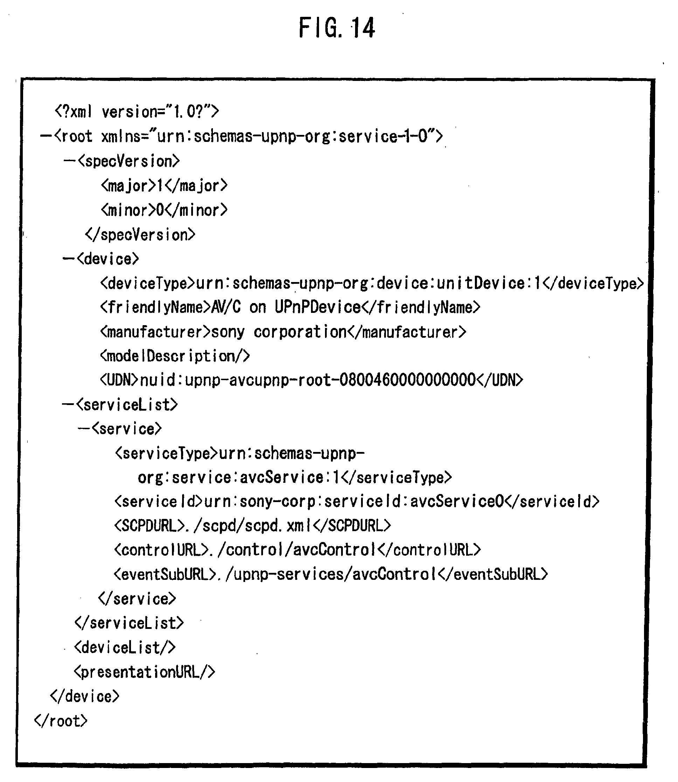

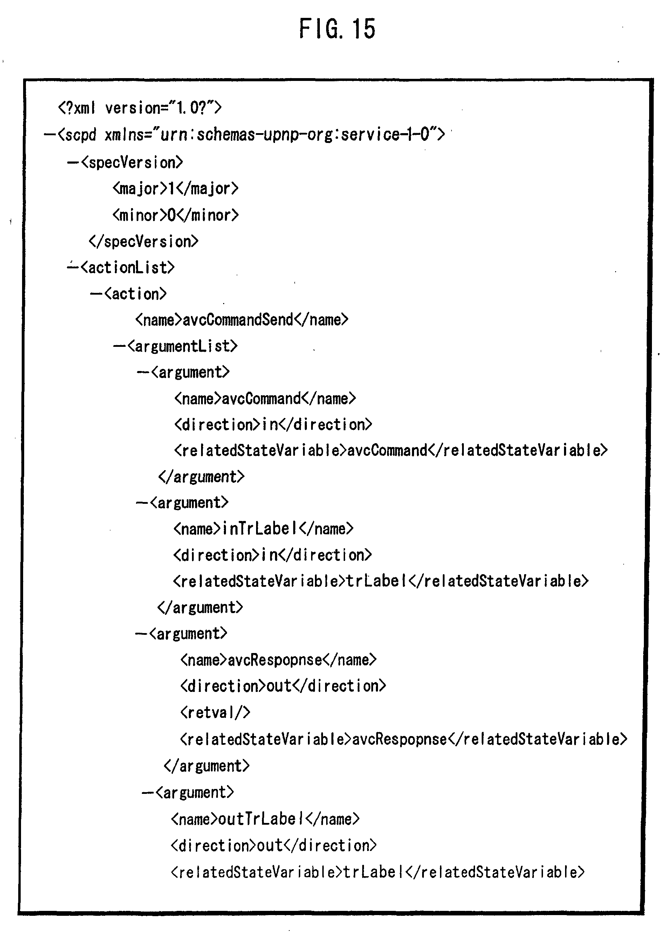

In Fig. 14, Fig. 15 and Fig. 15, there are indicated respectively other examples of the UPnP Device Description and the UPnP Service Description.

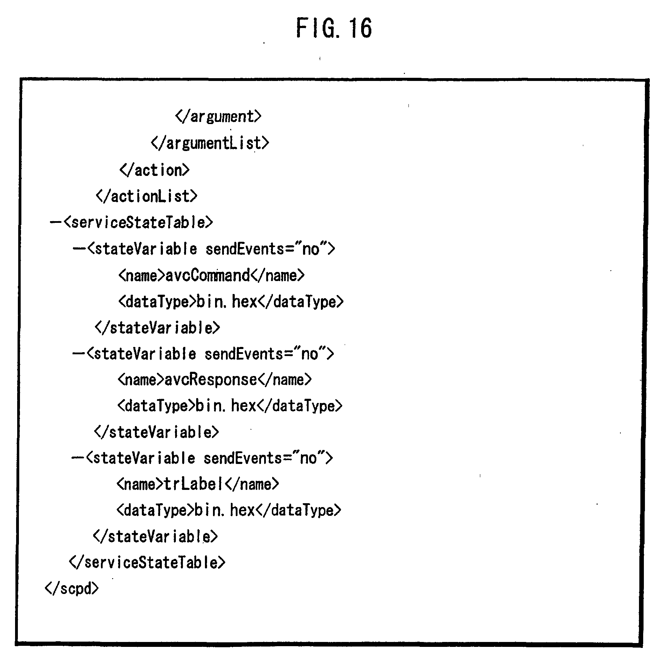

In the example of Fig. 14, a service having serviceId[urn:sony-corp:serviceId:avcService0 ]. A [./scpd/scpd.xml] indicates a URL of the UPnP Service Description shown in Fig. 15 and Fig. 16.

In Fig. 15 and Fig. 16 there is indicated an Action [avcCommandSend] for sending an AV/C command. In this action ,there are defined 4 parameters, namely [avcCommand], [InTrLabel], [avcResponse] and [outTrLabel]. For these, there are an [avcCommand], a [trLabel], an [avcResponse] and a [trLabel] respectively defined as related status variables and their data format are respectively defined as [bin.hex] in the [serviceStateTable].

It has to be noted that "in" in direction indicates that such parameter has been inputted from an apparatus having this Description to another apparatus, and "out" indicates that the parameter has been outputted from another apparatus and transmitted into an apparatus having this Description.

[stateVariable send Events=no] indicates that no notification is done against an apparatus in SUBSCRIBE status even when a status of such variable has been changed.

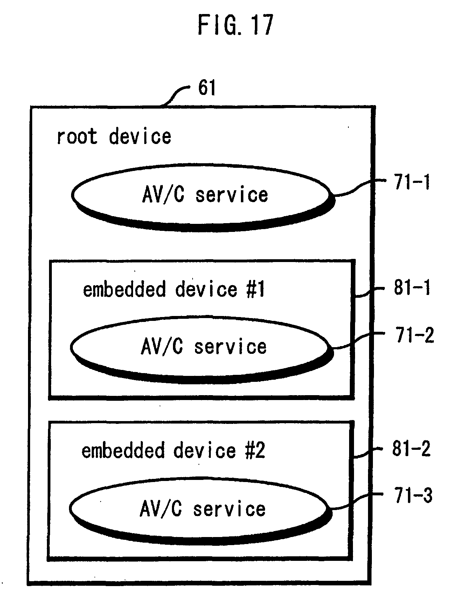

In the above description, although 1 root device 61 holds 1 single AV/C service 71 as shown in Fig. 3, for example, it is possible, as shown in Fig. 17, to make the root device correspond to unit, as well as to make an embedded device correspond subunit. In addition, in the case of this example, each device has only a single AV/C service.

Specifically, in the example of Fig. 17, the root device 61 has an AV/C service 71-1 and embedded devices 81-1 and 81-2 that the root device 61 has have respectively AV/C services 71-2 and 71-3.

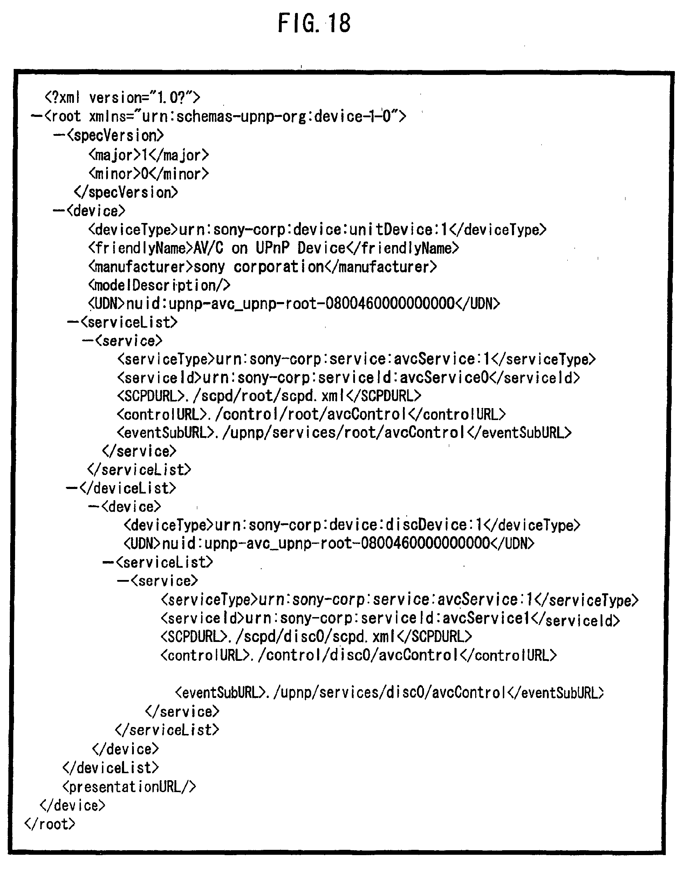

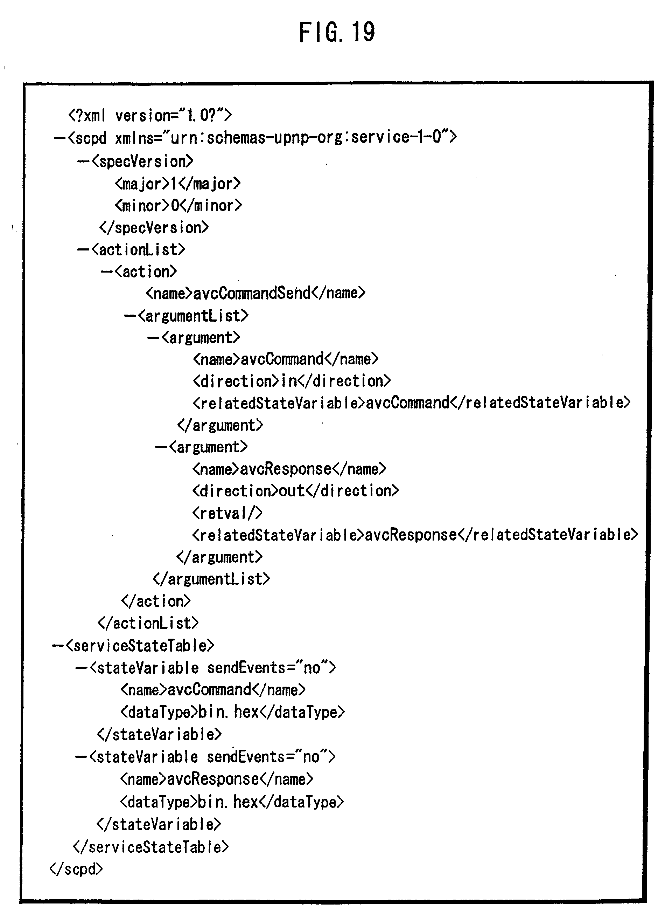

Fig. 18 and Fig. 19 show examples of structure of an UPnP Device Description that the root device 61 of Fig. 17 has and an UPnP Device Description that the AV/C service 71-1 has.

In the example of Fig. 18, a device in which a deviceType is [urn:sony-corp:device:unit Device:1] is provided, this device having a service in which a serviceType [urn:sony-corp:service:avcService:1] has a service Id [urn:sony-corp:serviceId:avcServ ice0]. Such SCPDURL[./scpd/root/scpd.xml] has described for example, a URL of UPnP Service Description of Fig. 19.

In addition, in this device there is further described a device (corresponding to embedded device 81-1) in which deviceType is [urn:sony-corp:device:discDevice:1]. This device has a service defined, in which a serviceType is [urn:sony-corp:service: avcService:1]. A [./scpd/disc0/scpd.xml] of this SCPDURL indicates, for example, a URL service Description that AV/C service 71-2 has.

In Fig. 19, there is described an Action [avcCommandSend] for sending the AV/C command. This Action has 2 arguments [avcCommand] and [avcResponse]. Data formats of these arguments are defined in serviceStatTable as [bin.hex].

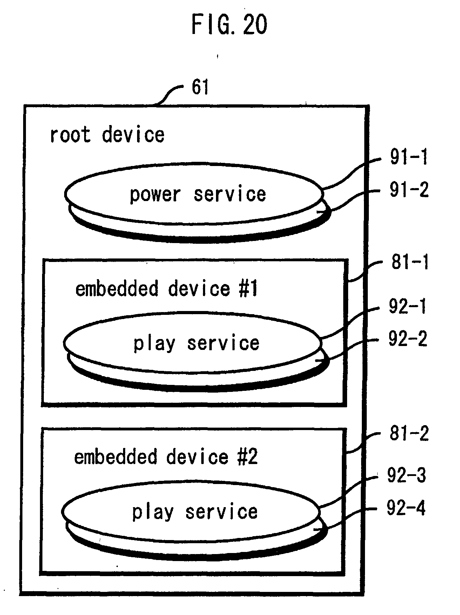

Fig. 20 shows another example of structure of device model. In this example, in a similar way to the example of Fig. 17, "root device" corresponds to "unit" and "embedded device" corresponds to "supunit". However, in this example, in a way that differs from the example of Fig. 17, 1 "service" is defined for each "opcode" of an AV/C command corresponding to respective "service".

Specifically, in the example of Fig. 20, the root device 61 has a service 91-2 corresponding to other opcodes other than the power service 91-1.

In addition, the embedded device 81-1 has a service 92-2 corresponding to an opcode of an AV/C command other than having the play service 92-1.

Furthermore, the embedded device 81-2 has a service 22-4 corresponding to another opcode other than having the play service 92-3.

For each service, Control is realized by Action, Status is realized by Query and Notify by Gena. General Inquiry can be substituted by Device Description.

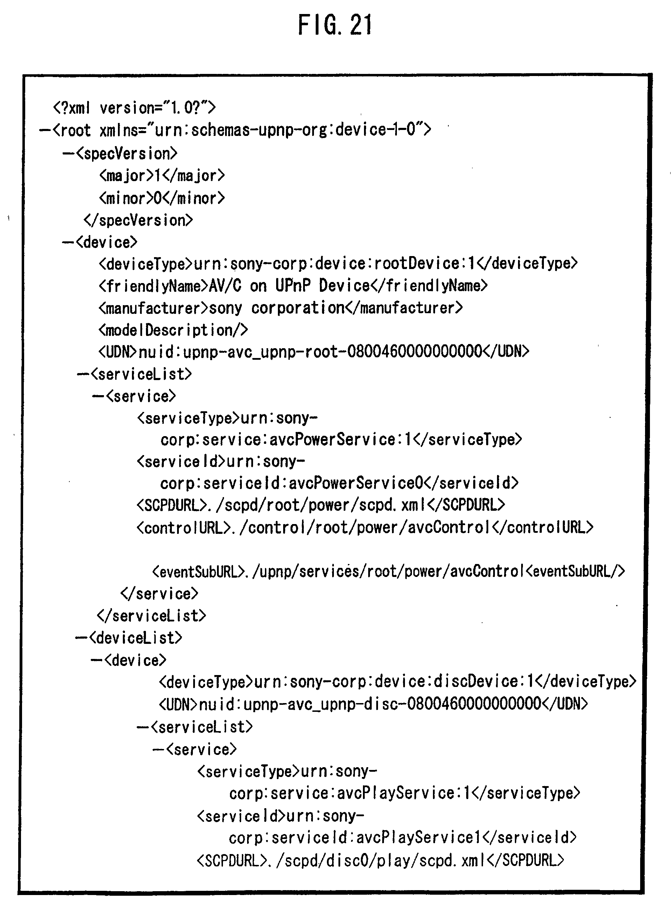

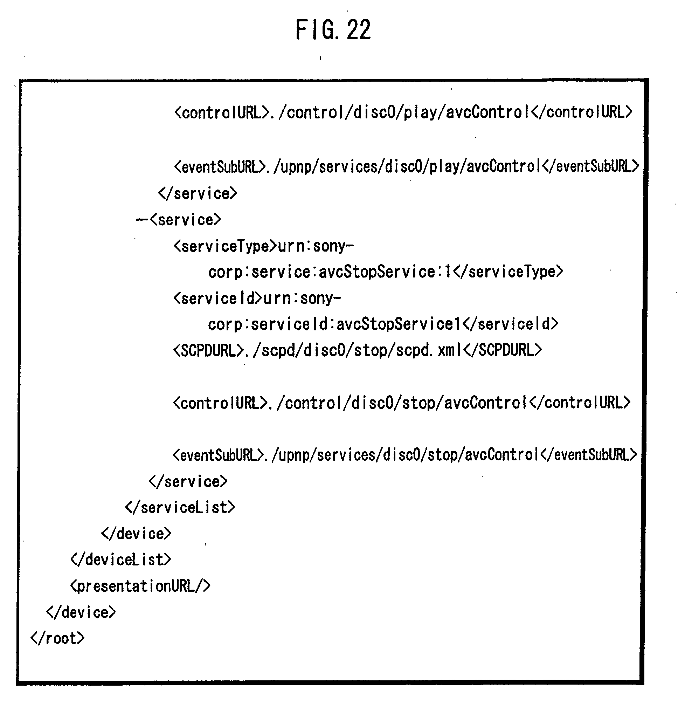

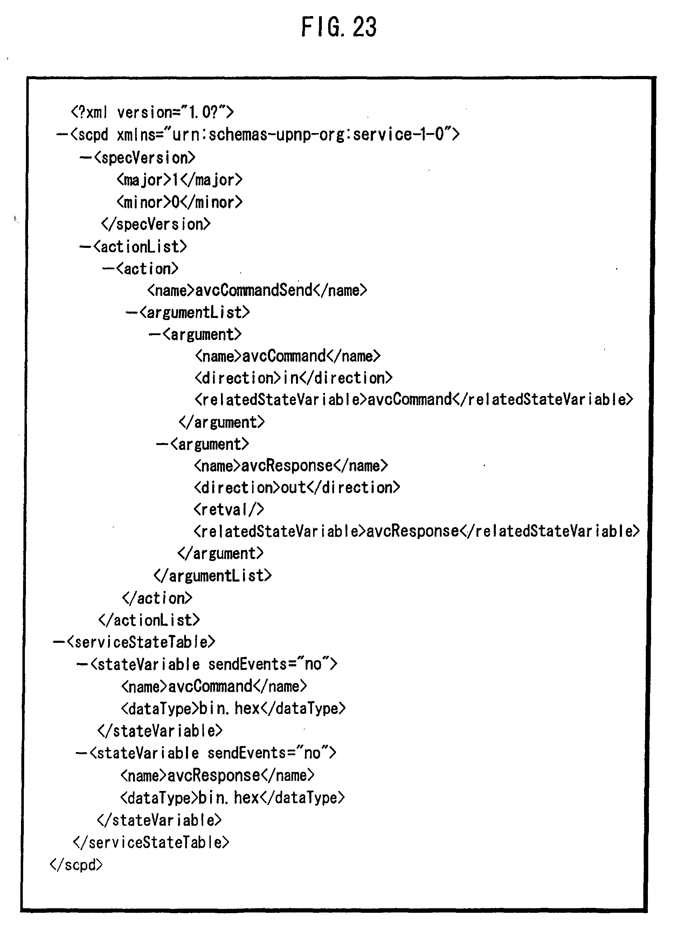

Fig. 21 and Fig. 22 show a structure of UPnP Device Description that the root device 61 that the example of Fig. 20 has and Fig. 23 shows an example of structure of UPnP Service Description that the power service 91-1 of Fig. 20 possesses.

The deviceType [urn:sony-corp:device:root Device:1] of Fig. 21 corresponds to a root device 61 of Fig. 20 and a serviceType [urn:sony-corp:service:avcPowerService:1] thereof corresponds to the power service91-1 of Fig. 20.

The deviceType [urn:sony-corp:device:disc Device:1] corresponds to embedded device 81-1 of Fig. 20, a serviceType [urn:sony-corp: service:avcPlayService:1] thereof corresponds to the play service92-1 and a serviceType [urn:sony-corp:service:avcStopService:1] thereof corresponds to another service92-2 that the embedded device 81-1 has.

In a service SCPDURL [./scpd/root/power/scpd.xml] corresponding to power service 91-1, there is described, for example, a URL of the UPnP Service Description of Fig. 23.

A SCPDURL [./scpd/disc0/play/scpd.xml] in which serviceType is [urn:sony-corp: service:avcPlayService:1] has described a URL of a Service Description that the play service 92-1 incorporates. In a similar way, a SCPDURL [./scpd/disc0/stop/scpd.xml] in which serviceType is [urn:sony-corp: service:avcStopService:1] has described a Service Description that the play service 92-3 incorporates.

In the example of Fig.23, there is described an action of [avcCommandSend] that sends the AV/C command. There are 2 arguments [avcCommand] and [avcResponse] added thereon and their respective data formats are defined in service StateTable as [bin.hex].

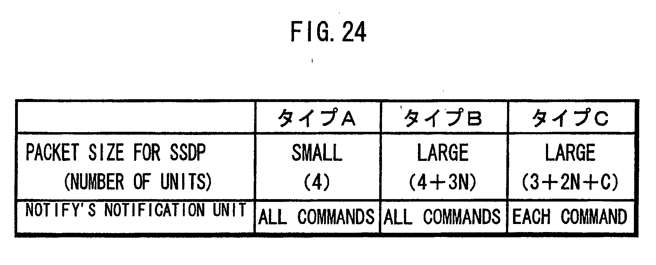

Fig. 24 shows a result of comparison of characteristics of device models of Fig. 3, Fig. 17 and Fig. 20. It is to be noted that in Fig. 24, Type A, Type B and Type C corresponds respectively to device models of Fig. 3, Fig. 17 and Fig. 20.

From comparison of Type A to Type C, it can be verified that a packet size of SSPD are largely different. In other words, when root device is 1, the number of SSPD is 3+2d+k. Here, d is a number of embedded devices and k means a number of service types. As a result, when the number of subunits is N, the packet size of SSPD is 4 for Type A, 4+3N for Type B and 3+2N+C for Type C. It is to be noted that shows a number of corresponding opcodes.

In special, in the case of Type B (Fig. 17), a number of packets flows that amounts to a few times of the number of subunits. In view of this, when taking consideration from the point of view of network traffic, the example of Type A (Fig. 3) having a smaller packet size of SSPD.

A unit of notification of NOTIFY is a unit of all command in the case of Type A and Type B and for Type C, it is a unit of each command.

Summarizing the above, it is considered that the example of Type A (Fig. 3) is the most suitable.

From the above, although an example having been taken in which the UPnP device 2 is controlled from the UPnP control point 1, it is possible to control the UPnP control point 1 from the UPnP device 2. However, in this case, as the UPnP device 2 becomes the UPnP control point mentioned above and the UPnP control point becomes the UPnP device, results that in a situation that is similar to the one mentioned above.

Although the sequence of processes described above can be realized by hardware, it is also possible to realize them by software. In the case in which the sequence of processes is realized by software, a program that constitutes the software is installed into a computer having specific hardware mounted therein or, for example, into a personal computer of general-purpose and the like that is enabled to execute each function thereof, from a network, a recording medium and the like.

Such recording medium is composed, as shown in Fig. 2, not only by package media having the program recorded thereon and which are separated from the apparatus main body and are distributed for supplying the program to the user, including magnetic disk 41 (including a Floppy Disk), optical disk 42 (including a CD-ROM (Compact Disk-Read Only Memory) and a DVD (Digital Versatile Disk)), magneto-optical disk 43 (including a MD (Mini-Disk)) or semiconductor memory 44, but also by ROM 22 or a hard disk and the like included in the storage section 28, which is supplied to the user upon being previously installed in the main body of the apparatus.

It is to be noted that, in the present specification, the step of describing the program to be recorded in the recording medium may include a process that does not necessarily follow a time sequence, thus including a process in parallel or a process that is executed individually, other than obviously a process that follows a time sequence following the described sequence.

In addition, in the present specification, it should be understood that system may indicate an apparatus as a whole that is constituted by a plurality of apparatuses.

### Industrial Applicability

As described above, according to the present invention, a AV/C command stored in a command based on SOAP is extracted and processed, thus permitting realization of an inexpensive system in which it is not necessary to develop a new command system and permitting easy and reliable control over an apparatus connected to a network.

## Claims

1. An information processing apparatus connected to a network having a format based on SOAP of IEEE 802 and performing communication with another information processing apparatus, the information processing apparatus **characterized by** comprising:
a capture means for capturing from said network, a command based on said SOAP containing an AV/C command according to IEEE 1394;
an extracting means for extracting said AV/C command from said command based on SOAP captured by said capture means; and
an execution means for executing a corresponding process based on said command based on SOAP, extracted by said extracting means.

2. The information processing apparatus according to claim 1, **characterized by** further comprising:
a generation means for generating said AV/C command;
an incorporation means for incorporating said AV/C command generated by said generation means to a command based on said SOAP; and
a transmitting means for transmitting to network said command based on said SOAP in which said AV/C command is incorporated by said incorporation means.

3. The information processing apparatus according to claim 1, **characterized in that** said execution means transmits a final response corresponding to said AV/C command.

4. The information processing apparatus according to claim 3, **characterized in that** said execution means transmits an INTERIM when not able to transmit said final response within a predetermined period of time after receiving said AV/C command.

5. The information processing apparatus according to claim 1, **characterized in that** said execution means has a device model, said device model has a root device and said root device has an AV/C service for executing a predetermined action.

6. The information processing apparatus according to claim 1, **characterized in that** said execution means has a device model, said device model has a root device and an embedded device corresponding respectively to a unit and a sub-unit according to IEEE 1394, said root device and said embedded device having respectively an AV/C service for executing a predetermined action.

7. The information processing apparatus according to claim 1, **characterized in that** said execution means has a device model, said device model has a root device and an embedded device corresponding respectively to a unit and a sub-unit according to IEEE 1394, said root device and said embedded device having respectively, for each of an AV/C command opcode, an AV/C service for executing a predetermined action.

8. An information processing method for an information processing apparatus connected to a network having a format based on SOAP of IEEE 802 and performing communication with another information processing apparatus, the information processing method **characterized by** comprising:
a capture step for capturing from said network, a command based on said SOAP containing an AV/C command according to IEEE 1394;
an extracting step for extracting said AV/C command from said command based on SOAP captured by said capture step; and
an execution step for executing a corresponding process based on said command based on SOAP, extracted by said extracting step.

9. A recording medium for recording a computer-readable program of an information processing apparatus connected to a network having a format based on SOAP of IEEE 802 and performing communication with another information processing apparatus, the program **characterized by** comprising:
a capture step for capturing from said network, a command based on said SOAP containing an AV/C command according to IEEE 1394;
an extracting step for extracting said AV/C command from said command based on SOAP captured by said capture step; and
an execution step for executing a corresponding process based on said command based on SOAP, extracted by said extracting step.

10. A program for controlling an information processing apparatus connected to a network having a format based on SOAP of IEEE 802 and performing communication with another information processing apparatus, the program making the computer execute:
a capture step for capturing from said network, a command based on said SOAP containing an AV/C command according to IEEE 1394;
an extracting step for extracting said AV/C command from said command based on SOAP captured by said capture step; and
an execution step for executing a corresponding process based on said command based on SOAP, extracted by said extracting step.
